# FASCICULE DE BREVET EUROPEEN

(11) **EP 0 532 103 B1**
(45) Date de publication et mention de la délivrance du brevet: **21.01.1998**
(21) Numéro de dépôt: 92202707.3
(22) Date de dépôt: 08.09.1992
(51) Int. Cl.: H04B 7/26

(54) **Système d'échange de signaux de commande pour un canal en duplex temporel**
Quittungssystem für einen Zeitduplexkanal
Handshaking system for a time division duplex channel

(30) Priorité: 11.09.1991 FR 9111211
(43) Date de publication de la demande: 17.03.1993
(73) Titulaire: Philips Electronics N.V., 5621 BA Eindhoven (NL)
(72) Inventeur: Makowski, Pierre, Société Civile S.P.I.D., F-75008 Paris (FR); Sfez, Rémi, Société Civile S.P.I.D., F-75008 Paris (FR); Guedes, Yvon, Société Civile S.P.I.D., F-75008 Paris (FR)
(74) Mandataire: Chaffraix, Jean

(56) Documents cités:
- EP-A- 0 399 611
- EP-A- 0 399 612
- EP-A- 0 480 505
- INTERNATIONAL SWITCHING SYMPOSIUM, Phoenix, Arizona, 15-20 mars 1987, vol. II, pages 759-765; P. ROBERT et al.: "Alcatel land mobile system CD900 a fully digital cellular approach using wideband TDMA"
- 39TH IEEE VEHICULAR TECHNOLOGY CONFERENCE, San Francisco, mai 1989, vol. II, pages 712-717; A. MALOBERTI: "Radio transmission interface of the digital paneuropean mobile system"

## Description

La présente invention concerne un système de transmission comportant au moins deux dispositifs d'abonnés distant et proche rattachés à au moins une station de base prévue pour gérer au moins les relations entre les dispositifs qui échangent des informations en alternat au moyen d'un multiplex de type temporel dans lequel sont prévus des intervalles de contrôle.

Un tel système trouve d'importantes applications notamment lorsque les liaisons s'effectuent par voie radioélectrique.

L'invention concerne aussi un dispositif d'abonné convenant à un tel système.

L'utilisation d'un intervalle de contrôle est décrit dans trois documents :
- L'article "Alcatel Land Mobile System CP900.." de P.Robert et P.Treillard paru dans : International Switching Symposium, Vol. II, Mars 1987, Phoenix (US) aux pages 759 à 765.
- L'article "Radio Transmission Interface of the Digital Paneuropean Mobile System" de A.Maloberti paru dans : 39th IEEE Vehicular Technology (US) paru en mai 1989, San Francisco (US) aux pages 712 à 717.
- La demande de brevet européen n° 0 480 505, revendiquant la demande de brevet français n° 2 667 747 déposée le 9 octobre 1990 au nom de la demanderesse, à considérer selon l'article 54 (3) de la convention sur les brevets européen.

Lorsque les systèmes du genre mentionné dans le préambule sont utilisés comme systèmes privés (par opposition aux systèmes publics) les ressources radioélectriques (canaux fréquentiels à bandes passantes réduites) sont distribuées de façon parcimonieuse. De ce fait, les communications entre deux abonnés s'effectuent en alternat : c'est-à-dire que lorsqu'un abonné parle, l'autre écoute.

Le problème qui se pose alors est dû à la demande simultanée de deux abonnés ou plus à parler. Survient alors le risque que la communication soit perdue.

Pour résoudre ce problème, un système du genre mentionné dans le préambule est remarquable en ce que pour une communication entre un dispositif d'abonné distant et un dispositif d'abonné proche, au moins un intervalle de contrôle est affecté à la transmission d'une demande de parole effectuée par l'un des abonnés, et en ce que cette demande de parole reçue par l'autre abonné est utilisée pour l'empêcher d'émettre.

La description suivante, faite en regard des dessins ci-annexés, le tout donné à titre d'exemple non limitatif fera bien comprendre comment l'invention peut être réalisée.

La figure 1 représente un schéma du système de transmission.

La figure 2 représente la répartition des intervalles de contrôle à l'intérieur d'un multiplex temporel.

La figure 3 représente le schéma d'une station de rattachement d'abonné.

La figure 4 montre le protocole de la commande d'alternat.

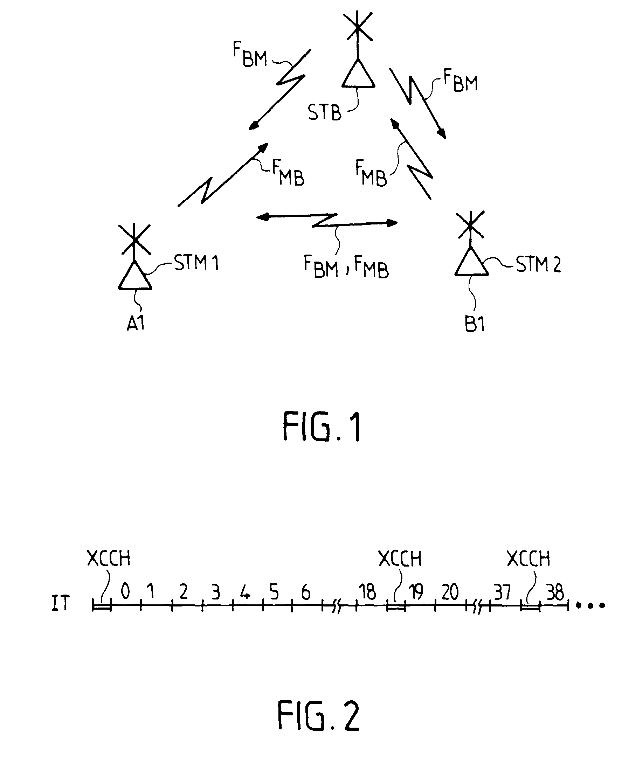

A la figure 1, on a représenté un système conforme à l'invention. Ce système est formé d'un ensemble de stations d'émission-réception STB, STM1 et STM2. Il va de soi que le nombre des stations peut être quelconque. STB est une station d'émission-réception de base, STM1 et STM2 sont des stations satellites, c'est-à-dire gérées par la station de base. En pratique la station de base est un poste fixe tandis que les stations STM1 et STM2 sont des stations portables ou embarquées dans des mobiles. A la station mobile STM1 est rattaché un dispositif d'abonné A1 et à la station mobile STM2 un dispositif d'abonné B1. Les stations communiquent entre elles par des liaisons radioélectriques qui utilisent deux canaux fréquentiels F_{BM} et F_{MB}.

En général le canal F_{BM} est emprunté par les communications allant de la base STB vers les mobiles STM1 et STM2 et le canal F_{MB} par les communications allant des stations mobiles vers la base. Les communications établies sur ces canaux fréquentiels sont organisées selon un multiplex temporel du type TDMA.

La figure 2 montre d'une manière très schématique l'organisation de ce multiplex. On a représenté une succession d'intervalles de temps IT numérotés 0, 1, 2, ..., 37, 38,... Ces intervalles de temps sont utilisés pour transmettre de l'information de parole par exemple. D'autres intervalles de temps XCCH sont placés avant l'intervalle "0", entre les intervalles 18 et 19, ..., entre les intervalles 37 et 38, etc... Ces intervalles peuvent être affectés à différentes tâches pour l'organisation du multiplex. Les intervalles XCCH sont utilisés par les stations mobiles soit pour émettre des informations on utilise alors le canal fréquentiel centré sur la porteuse F_{MB}, soit pour recevoir des informations le canal fréquentiel étant alors centré sur F_{BM}.

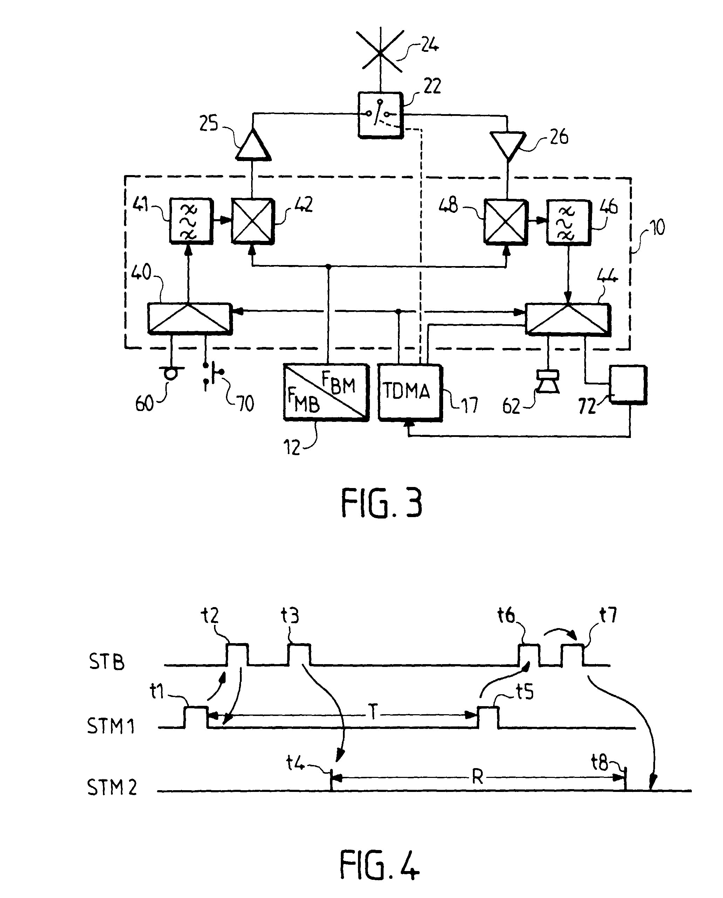

La figure 3 montre le schéma des stations mobiles STM1 et STM2 de structure identique.

Chaque station est composée d'un ensemble d'émission-réception 10 piloté par un couple d'oscillateurs de référence 12 oscillant respectivement aux fréquence F_{MB} et F_{BM}. Cet ensemble s'adapte à une trame TDMA au moyen d'un gestionnaire de trames 17. Un commutateur de duplexage 22 commandé par le gestionnaire 17 permet, sur une même antenne 24, à la fois d'émettre sur une fréquence F_{MB} et de recevoir sur une fréquence F_{BM}, différente ou non de F_{MB}. A ce commutateur 22 sont connectés un amplificateur d'émission 25 et de réception 26.

L'ensemble 10 est formé d'une partie émission 40 coopérant avec un filtre 41, centré sur une fréquence intermédiaire FI, et un modulateur 42. Le modulateur 42 centre sur la fréquence porteuse F_{MB} les informations fournies par la partie 40. La partie 40 arrange les informations à transmettre selon les commandes établies par le gestionnaire 17, module les informations en phase, fréquence ou amplitude sur une fréquence intermédiaire FI. Ce gestionnaire 17 permet aussi de récupérer les différentes informations contenues dans la trame TDMA reçue par un ensemble de réception 44. L'entrée de cet ensemble est reliée à la sortie d'un filtre 46, centré sur la fréquence FI, connecté à la sortie d'un démodulateur 48. Ce démodulateur 48 reçoit les signaux de l'amplificateur 26 et ceux fournis à la fréquence F_{BM}. La référence 60 indique le microphone de l'abonné et la référence 62 son écouteur. L'information de parole, préalablement codée sous forme numérique, est transmise dans l'un des intervalles de temps de la trame transmise par la porteuse F_{MB}, cet intervalle étant affecté par le gestionnnaire 17. De même, les informations de parole provenant de l'abonné lointain, transmises dans l'un des intervalles de temps de la trame transmise par F_{BM} sont restituées à l'écouteur, après décodage. Or le gestionnaire 17 agit pour que tous les XCCH puissent être reçus.

Conformément à l'invention, un tel système comporte des moyens pour émettre dans un intervalle XCCH une information de demande de parole pour un abonné distant, des moyens pour détecter cette demande de parole pour l'abonné distant et des moyens pour interdire l'accès à l'émission de l'abonné distant.

Les moyens pour émettre la demande de parole peuvent être réalisés par une pédale d'alternat 70 connectée à la partie 40, dans un intervalle de temps XCCH affecté à la liaison de l'abonné proche à l'abonné distant.

Les moyens pour détecter cette demande de parole pour l'abonné distant sont constitués par la réception de l'intervalle XCCH affecté à la communication à l'aide d'un récepteur de demande de parole 72 agissant sur le gestionnaire 17.

Les moyens pour interdire l'accès à l'émission peuvent être constitués par un voyant lumineux signalant à l'abonné distant qu'il ne peut pas émettre de parole puisque le gestionnaire 17 empêche cette commande ou bien encore, par le passage automatique en réception de l'abonné distant.

La figure 4 illustre la procédure permettant les communications en alternant d'une manière satisfaisante.

Au départ, on admet qu'un XCCH est attribué par la station STB pour la connexion de l'abonné A1 avec l'abonné B1.
- Au temps t1 l'abonné A1, par appui de la pédale 70 fait savoir à la station STB sa demande d'émission pour l'abonné B1 dans l'intervalle XCCH.
- Au temps t2, la station STB après vérification que cela est possible tout en évitant les conflits de simultanéité, autorise l'abonné A1 à émettre. STM1 est mis en position T (émission -en ce qui concerne la parole).
- Au temps t3 (qui peut être confondu avec l'instant t2) STB signale cette demande à la station STM2.
- Au temps t4 la station STM2 a reçu ce signal, ce qui la met en position de réception R.
- Au temps t5, l'abonné A1 relâche sa pédale d'alternat, ceci est transmis à la station STB.
- Au temps t6, la station STB accuse réception de ce relâchement à la station STM1.
- Au temps t7 (qui peut être confondu avec le temps t6) la station STB libère la station STM2.

Cette procédure peut encore être simplifiée selon les besoins, par exemple, par suppression des temps t2, t5, t6, t7. On donne alors simplement la priorité d'émission au dernier émetteur (t1, t3, t4).

## Revendications

1. Système de transmission comportant au moins deux dispositifs d'abonnés distant et proche rattachés à au moins une station de base prévue pour gérer au moins les relations entre les dispositifs qui échangent des informations en alternat au moyen d'un multiplex de type temporel dans lequel sont prévus des intervalles de contrôle, système caractérisé en ce que pour une communication entre un dispositif d'abonné distant et un dispositif d'abonné proche, au moins un intervalle de contrôle est affecté à la transmission d'une demande de parole effectuée par l'un des abonnés, et en ce que cette demande de parole reçue par l'autre abonné est utilisée pour l'empêcher d'émettre.

2. Système de transmission selon la revendication 1 dans lequel il est prévu une station de base par laquelle les informations entre les dispositifs d'abonné distants et les dispositifs d'abonné proches transitent, caractérisé en ce que pour ladite communication au moins un intervalle de temps de contrôle est affecté pour la relation entre l'un des abonnés et la station de base et un intervalle de temps de contrôle est affecté pour la relation entre l'autre abonné et la station de base.

3. Dispositif d'abonné pour un système de transmission comportant au moins deux dispositifs d'abonnés distant et proche rattachés à au moins une station de base prévue pour gérer au moins les relations qui s'établissent entre stations qui doivent se transmettre des informations en alternat en utilisant un multiplex de type temporel dans lequel sont prévus des intervalles de contrôle, dispositif caratérisé en ce qu'il comporte des moyens pour transmettre dans au moins un desdits intervalles de contrôle une demande de parole lorsqu'une demande de communication est demandée, des moyens pour recevoir des intervalles de contrôle couplés à des moyens de détection pour détecter la présence d'une demande de parole dans un ensemble d'au moins un intervalle de contrôle et des moyens pour empêcher l'émission lorsque les moyens de détection ont détecté une demande de parole.

## Patentansprüche

1. Übertragungssystem mit mindestens zwei zu einer Basisstation entfernt und benachbart gelegenen Teilnehmersystemen, die mindestens dafür vorgesehen sind, um die Verbindungen zwischen den die Informationen abwechselnd austauschenden Geräten mit einem mit Steuerintervallen versehenen Zeitmultiplex zu verwalten, mit dem Merkmal, daß dem System für eine Verbindung zwischen einem entfernten Teilnehmergerät und einem benachbarten Teilnehmergerät dem Antrag auf Sprachübertragung eines der Teilnehmer mindestens ein Steuerintervall zugeteilt wird und der Sprachübertragungsantrag dazu dient, wenn er vom anderen Teilnehmer empfangen wird, diesen nicht übertragen zu lassen.

2. Übertragungssystem laut Anspruch 1, in dem eine Basisstation vorgesehen ist, über die Informationen zwischen den entfernten Teilnehmereinrichtungen und den benachbarten Teilnehmereinrichtungen verlaufen, mit dem Merkmal, daß für diese besagte Verbindung mindestens ein Steuerzeitintervall für das Zeitverhaltnis zwischen einem der Teilnehmer und der Basisstation und ein Steuerzeitintervall für das Verhältnis zwischen dem anderen Teilnehmer und der Basisstation zugeteilt wird.

3. Teilnehmergerät für ein Übertragungssystem mit mindestens zwei entfernt und benachbart gelegenen Teilnehmergeräten, die mindestens mit einer Basisstation verbunden und dazu vorgesehen sind, mindestens die zwischen den Stationen zustandekommenden Verbindungen zu verwalten, die abwechselnd Informationen zwischeneinander zu übertragen haben, unter Verwendung eines Zeitmultiplex, in dem Steuerintervalle vorgesehen sind, mit dem Merkmal, daß das Mittel für die Übertragung von Sprechanträgen in mindestens einem der besagten Steuerintervalle enthält, wenn ein Verbindungsantrag gestellt wird, Mittel für den Empfang der Steuerintervalle, die mit Erfassungsmitteln gekoppelt sind, um das Vorhandensein eines Sprechantrags in einer Einheit mit mindestens einem Steuerintervall zu erkennen, und Mittel, um die Übertragung zu verhindern, wenn die Erfassungsmittel einen Sprechantrag erkannt haben.

## Claims

1. A transmission system comprising at least a remote and a near subscriber device connected to at least one base station provided for managing at least the connections between the devices exchanging information signals in the simplex mode by means of time multiplex signals in which control time intervals are provided, which system is characterized in that for a communication between a remote subscriber device and a near subscriber device, at least one control time interval is allocated to the transmission of a request to transmit or speak made by one of the subscribers, and in that this request to speak received by the other subscriber is used for preventing him from transmitting.

2. A transmission system as claimed in Claim 1, in which a base station is provided by which the information signals between the remote and near subscriber devices are transmitted, characterized, in that at least one control time interval is allocated to said communication for the connection between one of the subscribers and the base station and a control time interval is allocated for the connection between the other subscriber and the base station.

3. A subscriber device for a transmission system comprising at least a remote and a near subscriber device connected to at least one base station provided for managing at least the connections which occur between stations that have to transmit information signals in the simplex mode by means of time multiplex signals in which control time intervals are provided, which device is characterized in that it comprises means for transmitting in at least one of said control time intervals a request to transmit or speak signal when a request for communication is required, means for receiving control intervals coupled to detecting means for detecting the presence of a request-to-speak signal in an ensemble of at least one control interval and means for initiating the transmission when the detecting means have detected the presence of a request to transmit or speak.
